# EUROPÄISCHE PATENTSCHRIFT

(11) **EP 3 319 222 B1**
(45) Veröffentlichungstag und Bekanntmachung des Hinweises auf die Patenterteilung: **01.04.2020**
(21) Anmeldenummer: 17198226.7
(22) Anmeldetag: 25.10.2017
(51) Int. Cl.: H02P 6/16, H02P 29/66, G01D 5/14, G01P 13/04, G01K 7/36, G01K 13/08

(54) **STEUERUNGSVERFAHREN FÜR EINEN ELEKTROMOTOR, STEUERGERÄT SOWIE ELEKTROMOTOR**
CONTROL METHOD FOR AN ELECTRIC MOTOR, CONTROL DEVICE AND ELECTRIC MOTOR
PROCÉDÉ DE COMMANDE POUR UN MOTEUR ÉLECTRIQUE, APPAREIL DE COMMANDE AINSI QUE MOTEUR ÉLECTRIQUE

(30) Priorität: 02.11.2016 DE 102016221476
(43) Veröffentlichungstag der Anmeldung: 09.05.2018
(73) Patentinhaber: Robert Bosch GmbH, 70442 Stuttgart (DE)
(72) Erfinder: Rieger, Vincent, 76227 Karlsruhe (DE); Koenig, Patrick, 77833 Ottersweier (DE); Kuehn, Timo, 76470 Oetigheim (DE); Rapp, Martin, 77815 Buehl (DE)

(56) Entgegenhaltungen:
- DE-A1-102006 055 305
- DE-A1-102011 007 147
- DE-A1-102013 020 072
- DE-A1-102014 218 381

## Beschreibung

Die vorliegende Erfindung betrifft ein Steuerungsverfahren für einen Elektromotor und ein Steuergerät, welches dazu eingerichtet ist, das Steuerungsverfahren durchzuführen. Die Erfindung betrifft auch einen Elektromotor mit dem Steuergerät.

### Stand der Technik

Der magnetische Fluss eines Permanentmagneten sinkt mit steigender Temperatur. Darüber hinaus kann der magnetische Fluss eines Permanentmagneten durch mechanische Einwirkungen, beispielsweise durch Stöße oder Vibrationen, oder eine sonstige Alterung, beispielsweise durch Korrosion, lokal begrenzt reduziert werden. Bei einer Verwendung von Permanentmagneten in einem Elektromotor eines Elektrofahrzeuges resultiert bei einem reduzierten magnetischen Fluss der Permanentmagnete ein geringeres Antriebsdrehmoment und/oder eine reduzierte Drehzahl bzw. eine geringere Energieerzeugung im Generatorbetrieb. Ein reduzierter magnetischer Fluss beeinflusst demnach die Fahreigenschaften des Elektrofahrzeugs, beispielsweise dessen Reichweite und dessen Beschleunigungsverhalten. Im Extremfall kann letzteres sicherheitsrelevant für einen Insassen sein.

Gleichstrommotoren (BLDC-Motoren) mit beispielsweise drei Phasen und permanenterregtem Rotor können statt über Bürsten elektrisch kommutiert werden, siehe beispielsweise die Schriften DE 39 32 762 A1 oder DE 103 14 698 A1.

DE 10 2006 055305 A1 offenbart einen Elektromotor mit einem Stator sowie einen um eine Drehachse drehbaren Rotor. Der Rotor hat einen Sensormagneten mit einer geradzahligen Zahl von Sensorpolen. Der Sensormagnet ist zur Erzeugung eines Magnetflusses mit einer Magnetflussdichte ausgebildet, die über den Drehwinkel einen sinusförmigen Verlauf hat. Ferner sind mindestens zwei analoge Rotorstellungssensoren vorgesehen zwecks Erzeugung von analogen Rotorstellungssignalen, welche die Magnetflussdichte des auf den jeweiligen Sensor vom Sensormagneten her einwirkenden Magnetflusses charakterisieren. Diese analogen Rotorstellungssensoren sind im Bereich des Umfangs des Sensormagneten auf einer gemeinsamen, zur Drehachse des Sensormagneten im wesentlichen parallelen ebenen Trägeranordnung dort angeordnet, wo die Trägeranordnung von einer zur Drehachse senkrechten ersten Ebene geschnitten wird. Diese analogen Rotorstellungssensoren sind mit einem solchen Abstand voneinander auf der Trägeranordnung angeordnet, dass Grad erzeugen. Ein Signalgenerator dient zur Erzeugung mindestens eines impulsförmigen Signals aus diesen beiden um 90 Grad phasenverschobenen sinusförmigen Signalen. Aus diesem impulsförmigen Signal kann die aktuelle Drehzahl genau bestimmt werden.

Eine Aufgabe der vorliegenden Erfindung ist es, das Drehmoment eines Elektromotors zu erhöhen und/oder Geräusche des Elektromotors zu minimieren.

### Offenbarung der Erfindung

Die Erfindung wird durch die Gegenstände der unabhängigen Ansprüche 1,4 definiert.

Die vorliegende Erfindung betrifft ein Steuerungsverfahren für einen Elektromotor mit einem Stator, welcher einen ersten digitalen Magnetfeldsensor und einen davon beabstandeten zweiten digitalen Magnetfeldsensor sowie zusätzlich einen von den digitalen Magnetfeldsensoren beabstandeten analogen Magnetfeldsensor umfasst. Der Elektromotor weist außerdem einen Rotor mit Permanentmagneten und ein Steuergerät auf. Das Steuergerät ist dazu eingerichtet, das Steuerungsverfahren durchzuführen.

Das Steuerungsverfahren umfasst eine erste winkelabhängige, digitale Erfassung einer magnetischen Flussdichte der Permanentmagnete mittels des ersten digitalen Magnetfeldsensors und eine zweite winkelabhängige, digitale Erfassung der Flussdichte mittels des zweiten digitalen Magnetfeldsensors. In einem weiteren Schritt erfolgt eine winkelabhängige, analoge Erfassung der magnetischen Flussdichte der Permanentmagnete mittels des analogen Magnetfeldsensors. In einem darauf folgenden Schritt wird die Rotorlage in Abhängigkeit der digital erfassten Flussdichten des ersten digitalen Magnetfeldsensors und des zweiten digitalen Magnetfeldsensors sowie in Abhängigkeit der analog erfassten Flussdichte ermittelt. Anschließend erfolgt eine Regelung des Elektromotors in Abhängigkeit der ermittelten Rotorlage. Die Rotorlage zum Stator kann durch die analog erfasste Flussdichte genauer als im Stand der Technik bestimmt werden. Damit kann die Regelung, d.h. die elektrische Kommutierung des Elektromotors, verbessert werden, wodurch die Laufruhe des Elektromotors gesteigert, die Geräuschentwicklung des Elektromotors reduziert, ein stärkeres Drehmoment und/oder eine höhere Drehzahl erreicht werden kann.

Es erfolgt zur Regelung des Elektromotors bzw. zur Anpassung des Drehmoments an eine veränderte magnetische Flussdichte aufgrund einer Alterung der Permanentmagnete oder einer veränderten Temperatur eine Ermittlung von Extremwerten der analog erfassten Flussdichte. Die Beträge der ermittelten Extremwerte variieren in Abhängigkeit der Temperatur, d.h. bei einer erhöhten Temperatur resultiert eine reduzierte magnetische Flussdichte eines Permanentmagneten. Der Mittelwert der ermittelten Extremwert-Beträge der analog erfassten Flussdichte ist demnach ein Maß für die Temperatur des Rotors. Die Regelung des Elektromotors erfolgt in dieser bevorzugten Ausgestaltung in Abhängigkeit der ermittelten Rotorlage und zusätzlich in Abhängigkeit eines Mittelwerts der ermittelten Extremwert-Beträge der analog erfassten Flussdichte. Somit kann eine Temperaturerhöhung des Rotors durch die Regelung beeinflusst werden. Insbesondere kann die Leistung des Elektromotors, beispielsweise die Drehzahl und/oder das Drehmoment, bei einer hohen Temperatur des Rotors bzw. einen niedrigen Mittelwert der ermittelten Extremwert-Beträge begrenzt werden, sodass keine weitere Temperaturerhöhung resultiert, welche den Elektromotor bzw. die Permanentmagnete und/oder andere elektrische Komponenten, beispielsweise die Sensoren oder das Steuergerät, irreversibel schaden würde.

In einer weiterführenden Ausgestaltung der Erfindung erfolgt vor der Regelung außerdem ein Vergleich des ermittelten Mittelwerts der Extremwert-Beträge der analog erfassten Flussdichte mit einem Temperaturschwellenwert. Bei einer Unterschreitung des Temperaturschwellenwerts, d.h. wenn eine erhöhte Temperatur der Permanentmagnete des Rotors vorliegt, wird eine separate Kühlvorrichtung zur Kühlung des Rotors angesteuert. Die Kühlvorrichtung kann beispielsweise ein Ventilator, ein Kühlkreislauf oder das Schalten eines wärmeleitenden Kontakts zu einem Wärmespeicher sein. Durch diese weiterführende Ausgestaltung kann die Erhöhung der Rotortemperatur durch aktive Kühlung begrenzt bzw. die Rotortemperatur aktiv gesenkt werden. Dies reduziert auch ansonsten notwendige Stillstandszeiten oder Schädigungen des Elektromotors.

In einer alternativen Ausgestaltung erfolgt vor der Regelung des Elektromotors die Ermittlung der Extremwerte der analog erfassten Flussdichte, wobei jeder Extremwert einer Rotorlage bzw. einer Position auf dem Rotor zugeordnet wird. Die Regelung des Elektromotors erfolgt in dieser alternativen Ausgestaltung in Abhängigkeit der ermittelten Rotorlage bzw. der Position auf dem Rotor und zusätzlich in Abhängigkeit mindestens einer bestimmten Differenz eines Extremwert-Betrags zum berechneten Mittelwert der Extremwert-Beträge der analog erfassten Flussdichte. Durch diese Ausgestaltung kann ein Defekt bzw. eine Abschwächung der magnetischen Flussdichte eines Permanentmagneten bei der Regelung des Elektromotors berücksichtigt werden, beispielsweise durch unterschiedliche Amplituden der Phasenströme oder eine Anpassung der Phasenverschiebung zwischen den Phasenströmen bzw. Steuersignalen, sodass die Laufruhe des Elektromotors weiter gesteigert, die Geräuschentwicklung des Elektromotors zusätzlich reduziert sowie insbesondere ein magnetischer Ausgleich des Defektes zur Erzeugung eines konstanteren Drehmoments des Elektromotors erreicht werden kann.

In einer Weiterführung erfolgt die Regelung des Elektromotors sowohl in Abhängigkeit der Rotorlage, der Temperatur des Rotors, d.h. in Abhängigkeit des ermittelten Mittelwertes der Extremwert-Beträge der analog erfassten Flussdichte, und eines lokalen Defekts eines Permanentmagneten, d.h. in Abhängigkeit mindestens einer bestimmten Differenz eines Extremwert-Betrags der analog erfassten Flussdichte zum berechneten Mittelwert der analog erfassten Flussdichte. Durch die Weiterführung wird die Regelung insbesondere zur Erzeugung eines höheren Drehmoments des Elektromotors und einer Reduktion der Geräuschentwicklung des Elektromotors optimiert.

Das erfindungsgemäße Steuergerät, welches dazu eingerichtet ist, das Steuerungsverfahren durchzuführen, umfasst wenigstens eine Recheneinheit, welche die magnetische Flussdichte der Permanentmagnete des Rotors mittels des ersten digitalen Magnetfeldsensors und mittels des zweiten digitalen Magnetfeldsensors winkelabhängig digital erfasst. Die Recheneinheit erfasst auch analog und winkelabhängig die Flussdichte der Permanentmagnete des Rotors mittels des analogen Magnetfeldsensors. Die Recheneinheit ermittelt die Rotorlage entsprechend des Steuerungsverfahrens in Abhängigkeit der digital und analog erfassten Flussdichten. Die Recheneinheit erzeugt Steuersignale in Abhängigkeit der ermittelten Rotorlage zur Regelung des Elektromotors, wobei die Steuersignale insbesondere drei Phasenströme sind.

Vorzugsweise regelt die Recheneinheit die Steuersignale, insbesondere die Stromstärken der drei erzeugten Phasenströme, zusätzlich in Abhängigkeit des Mittelwerts der Extremwert-Beträge der analog erfassten Flussdichte.

Optional vergleicht die Recheneinheit in einer Weiterführung den Mittelwert der Extremwert-Beträge der analog erfassten Flussdichte mit dem Temperaturschwellenwert, wobei die Recheneinheit bei Unterschreitung des Temperaturschwellenwerts ein weiteres Steuersignal für die Kühlvorrichtung erzeugt.

In einer alternativen Ausgestaltung regelt die Recheneinheit die Steuersignale, insbesondere die Stromstärken der drei erzeugten Phasenströme, in Abhängigkeit der Rotorlage und mindestens einer ermittelten Differenz zwischen den Extremwert-Beträgen der analog erfassten Flussdichte und dem Mittelwert der Extremwert-Beträge der analog erfassten Flussdichte.

Die vorliegende Erfindung wird nachfolgend anhand bevorzugter Ausführungsformen und beigefügter Zeichnungen erläutert.
- Figur 1:: Elektromotor mit Magnetfeldsensoren
- Figur 2:: Blockschaltbild des Steuergerätes
- Figur 3:: Diagramm der digitalen Flussdichte B_{d}
- Figur 4:: Diagramm der analogen Flussdichte Bₐ
- Figur 5:: Diagramm der analogen Flussdichte Ba bei lokalem Defekt
- Figur 6:: Ablaufdiagramm des Steuerungsverfahrens
- Figur 7:: Diagramm der analogen Flussdichte Bₐ bei erhöhter Temperatur
- Figur 8:: Diagramm der analogen Flussdichte Bₐ bei lokalem Defekt

### Ausführungsbeispiele

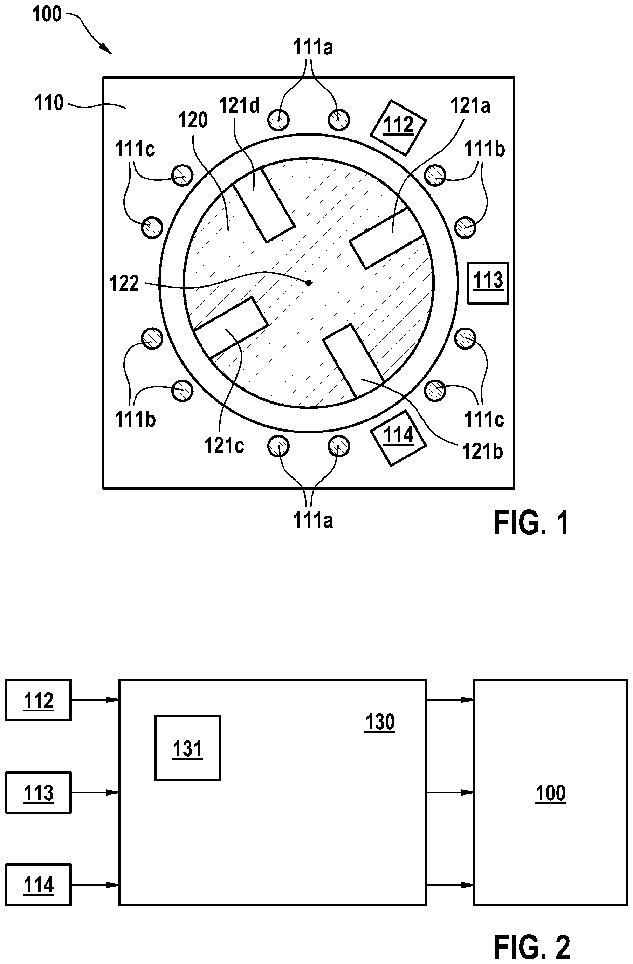

In Figur 1 ist ein Elektromotor 100 im Querschnitt dargestellt. Der Elektromotor 100 umfasst einen Stator 110 und einen Rotor 120. Der Stator 110 wird durch drei elektrische Phasen bzw. Steuersignale einer Recheneinheit zur Erzeugung eines rotierenden Stator-Erregermagnetfelds angesteuert bzw. geregelt, wobei jede Phase jeweils zwei elektrische Phasenleitungen 111a, 111b und 111c umfasst. Die Phasenleitungen 111a, 111b und 111c können als Wicklungen oder massive Kupferleiterschlaufen ausgebildet sein. Die Steuersignale, d.h. die Phasen bzw. Phasenströme, in den Phasenleitungen 111a, 111b und 111c sind Wechselströme, welche zueinander phasenverschoben sind. Der Stator weißt außerdem einen ersten digitale Magnetfeldsensor 113 und einen zweiten digitalen Magnetfeldsensor 114 auf. Erfindungsgemäß umfasst der Stator 110 statt eines dritten digitalen Magnetfeldsensors zur elektrischen Kommutierung, welcher im Stand der Technik vorgesehen wäre, einen analogen Magnetfeldsensor 112, insbesondere einen analogen Hall-Sensor. Die Magnetfeldsensoren 112, 113 und 114 sind in diesem Ausführungsbeispiel in einer gemeinsamen Querschnittsebene des Stators 110 senkrecht zur Rotorachse 122 und in Umlaufrichtung des Rotors 120 versetzt bzw. mit einem mechanischen Winkelabstand beabstandet, d.h. winkelabhängig, angeordnet, siehe Figur 1.

Der mechanische Winkelabstand Δϕ bzw. die Einbauposition ϕₓ der Magnetfeldsensoren 112, 113 und 114 wird für die elektrischen Kommutierung in Abhängigkeit der Polpaarzahl zₚ gewählt, wobei der Winkelabstand Δϕ bei einem einpoligen Rotor, d.h. der Rotor weist einen Nordpol und einen Südpol auf, typischerweise 120° beträgt. Bei dem zweipoligen Rotor aus Figur 1, d.h. der Rotor weist zwei Nordpole und zwei Südpole an seiner Außenfläche auf, beträgt der Winkelabstand Δϕ zwischen den Magnetfeldsensoren 112, 113 und 114 jeweils typischerweise 60°. Die Magnetfeldsensoren 112, 113 und 114 erfassen demnach das gleiche Rotormagnetfeld. Durch den Winkelabstand zwischen den Magnetfeldsensoren 112, 113 und 114 resultiert eine Phasenverschiebung der Sensorsignale, wodurch die elektrische Kommutierung ermöglicht wird. Die Sensorsignale der Magnetfeldsensoren 112, 113 und 114 sind also zueinander phasenverschoben. Die Magnetfeldsensoren 112, 113 und 114 können alternativ zwischen den Einbaupositionen andere mechanische Winkelabstände Δϕ aufweisen.

Bezüglich der Richtung der Rotorachse 122 können die Magnetfeldsensoren 112, 113 und 114 alternativ ebenfalls versetzt angeordnet sein, d.h. die Magnetfeldsensoren 112,113 und 114 können in unterschiedlichen Querschnittsebene des Stators 110 angeordnet sein.

Der Rotor 120 umfasst Permanentmagnete 121a, 121b, 121c und 121d, welche jeweils ein Magnetfeld, das heißt eine magnetische Flussdichte B, aufweisen. Die Permanentmagnete 121a, 121b, 121c und 121d sind mit abwechselnder Polarisierung, am äußeren Umfang des Rotors 120 angeordnet, beispielsweise wechselnd Südpol 121a, Nordpol 121b, Südpol 121c und Nordpol 121d, siehe Figur 1. Die magnetische Flussdichte B ist demnach um den Umfang des Rotors 120 alternierend und bevorzugt symmetrisch ausgeprägt. Alternativ kann der Rotor auch eine andere Anzahl an Permanentmagneten und/oder ein anderen Rotoraufbau aufweisen. Der Rotoraufbau kann beispielsweise alternativ vergrabene Permanentmagnete bzw. eine andere Kernform umfassen.

In Figur 2 ist das erfindungsgemäße Steuergerät 130 als Blockschaltbild dargestellt. Das Steuergerät 130 weist eine Recheneinheit 131 auf. Die Recheneinheit 131 erfasst analog die magnetische Flussdichte Bₐ des Rotors mittels des analogen Magnetfeldsensors 112. Die Recheneinheit 131 erfasst außerdem digital die magnetische Flussdichte B_{d} mittels des ersten digitalen Magnetfeldsensors 113 und digital die magnetische Flussdichte B_{d} mittels des zweiten digitalen Magnetfeldsensors 114. Die Recheneinheit 131 erzeugt des Weiteren Steuersignale zur Regelung des Elektromotors. Bevorzugt sind die Steuersignale drei Phasenströme, d.h. drei Wechselströme gleicher Frequenz in den elektrischen Phasenleitungen 111a, 111b und 111c. Die Phasenströme sind bevorzugt zueinander in ihren Phasenwinkeln um 120° fest verschoben, d.h. die Phasenströme weisen zueinander eine Phasenverschiebung von 120° auf. Die Steuersignale bzw. Phasenströme erzeugen das rotierende Stator-Erregermagnetfeld, welches mittels der magnetischen Wechselwirkung eine Rotationsbewegung des Rotors 120 bewirkt. Durch eine Veränderung der Frequenz und/oder der Stromstärke der Phasenströme bzw. der Steuersignale lässt sich das Drehmoment des Rotors 120 und/oder dessen Winkelgeschwindigkeit beeinflussen.

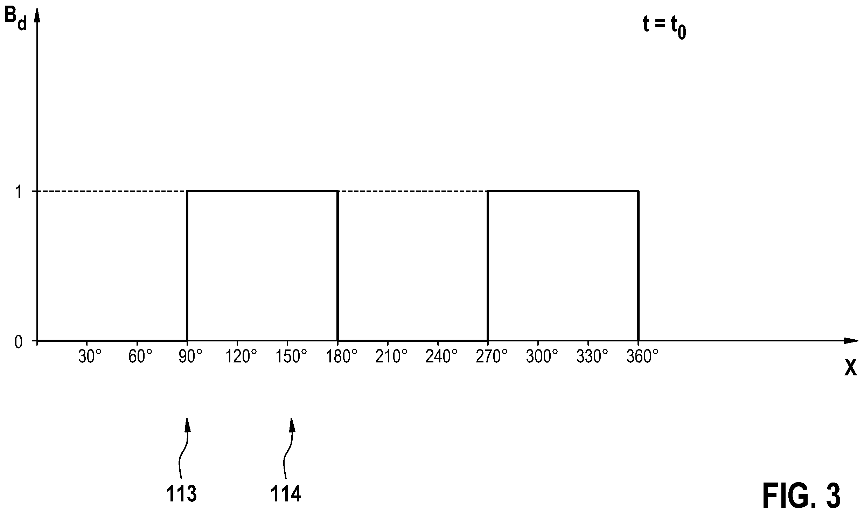

In Figur 3 ist ein Diagramm der digitalen magnetischen Flussdichte B_{d} des Rotors 120 in Abhängigkeit der Rotorlage X zu einem festen Zeitpunkt t₀ dargestellt. Von einem digitalen Magnetfeldsensor 113 und 114 wird typischerweise nur eine Polarisationsrichtung erfasst, siehe Figur 3. Die erfasste, magnetischen Flussdichte B_{d} an einem Ort ändert sich in Abhängigkeit der Rotation des Rotors 120, d.h. in Abhängigkeit der Zeit. Die magnetische Flussdichte B_{d} wird durch den ersten digitalen Magnetfeldsensor 113 und den zweiten digitalen Magnetfeldsensor 114 an unterschiedlichen Positionen, beispielsweise durch den ersten digitalen Magnetfeldsensor 113 bei 90° und den zweiten digitalen Magnetfeldsensor 114 bei 150°, d.h. mit einem Winkelabstand von 60°, in Umfangsrichtung des Rotors 120 digital erfasst. Der erste digitale Magnetfeldsensor 113 und der zweite digitale Magnetfeldsensor 114 erfassen die magnetische Flussdichte B_{d} des Rotors 120 demnach winkelabhängig, d.h. an unterschiedlichen Orten, siehe Figur 1. Die Sensorsignale des ersten digitalen Magnetfeldsensor 113 und des zweiten digitalen Magnetfeldsensor 114 sind demnach phasenverschoben.

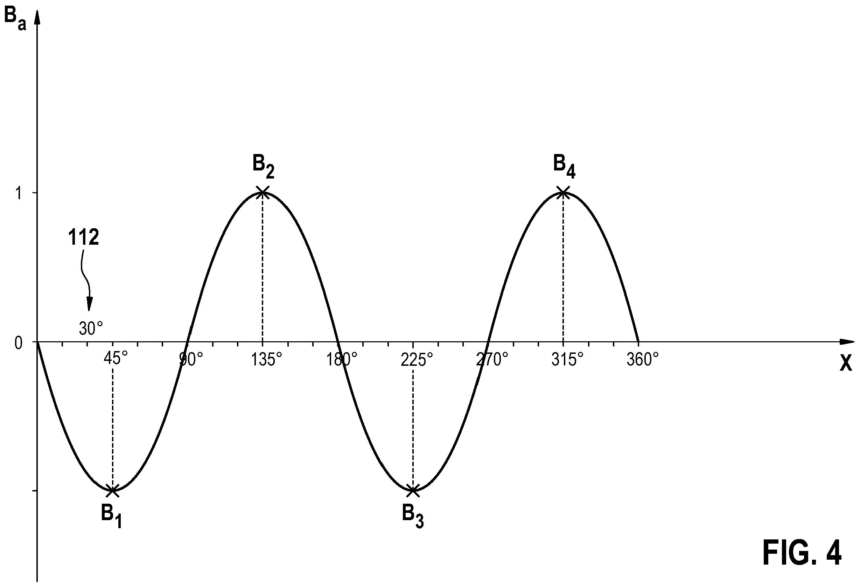

In Figur 4 ist ein Diagramm der analogen magnetischen Flussdichte Bₐ des Rotors 120 in Abhängigkeit der Rotorlage X zu einem Zeitpunkt t₀ dargestellt. Der analoge Magnetfeldsensor 112 ist von den beiden digitalen Magnetfeldsensoren 113 und 114 mit einem Winkelabstand beabstandet, beispielsweise ist der analoge Magnetfeldsensor 112 an einer Einbauposition von 30° gegenüber der Senkrechten des Elektromotors 100 mit einem Winkelabstand zum digitalen Magnetfeldsensor 113 von 60° angeordnet, wie in Figur 1 dargestellt. Der analoge Magnetfeldsensor 112 erfasst ebenfalls die magnetische Flussdichte Bₐ des Rotors 120 in Abhängigkeit der Rotation des Rotors 120 bzw. der Zeit, wobei der analoge Magnetfeldsensor 112 neben dem Durchgang eines Nordpols auch den Durchgang eines Südpols der Permanentmagnete des Rotors 120 sowie die Stärke der magnetischen Flussdichte eines Permanentmagneten 121a, 121b, 121c und 121d erfasst. Die analog erfasste magnetische Flussdichte Bₐ ist in diesem Beispiel Sinus-förmig. Die analog erfasste magnetische Flussdichte Bₐ weist demnach gegenüber der digital erfassten magnetischen Flussdichte B_{d} zusätzliche und genauere Informationen über die magnetische Flussdichte des Rotors 120 und/oder die Rotorlage X auf. Diese Informationen aus der analog erfassten magnetischen Flussdichte über die Rotorlage X werden erfindungsgemäß für eine optimierte Regelung des Elektromotors verwendet.

Die Extremwerte B₁, B₂, B₃ und B₄ der analog erfassten magnetischen Flussdichte Bₐ sind in Figur 4 gekennzeichnet. Die Extremwert-Beträge |B_{1|}|, |B₂|, |B₃| und |B₄| werden zur Überprüfung einer lokalen Abschwächung der magnetischen Flussdichte Bₐ der Permanentmagnete 121a, 121b, 121c und 121d und zur Ermittlung des Mittelwerts M der Extremwert-Beträge |B_{1|}|, |B₂|, |B₃| und |B₄| verwendet, wobei der Mittelwert M ein Maß für die Temperatur T der Permanentmagnete 121a, 121b, 121c und 121d des Rotors 120 ist.

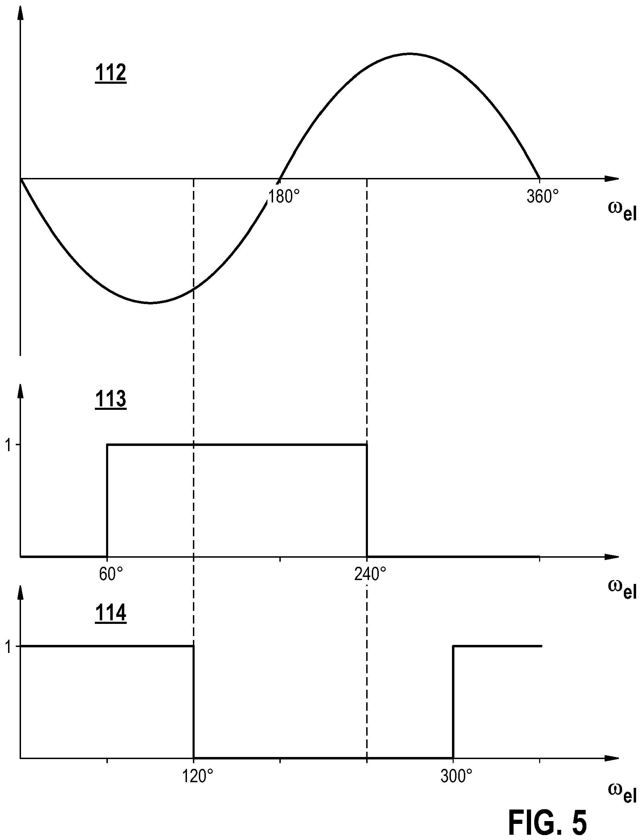

In Figur 5 sind die jeweils zueinander phasenverschobenen elektrischen Signale der beiden digitalen Magnetfeldsensoren 113 und 114 und des analogen Magnetfeldsensors 112 für einen Nord- und Südpoldurchgang in Abhängigkeit des elektrischen Winkels ωₑₗ dargestellt. Der mechanische Winkelabstand Δϕ der Einbaupositionen den Magnetfeldsensoren 112, 113 und 114 beträgt jeweils 60°. Die daraus resultierende elektrische Phasenverschiebung zwischen den drei elektrischen Sensorsignalen der Magnetfeldsensoren 112, 113 und 114 beträgt folglich 120°. Im Stand der Technik sind stattdessen beispielsweise drei digitale Magnetfeldsensoren angeordnet, wobei die mechanischen Anordnungsorte der Sensoren und die daraus resultierenden Phasenverschiebungen ähnlich sein können. Durch die resultierende Phasenverschiebung wird im Stand der Technik bei einer Änderung des jeweiligen digitalen Sensorsignals der Stator elektrisch kommutiert.

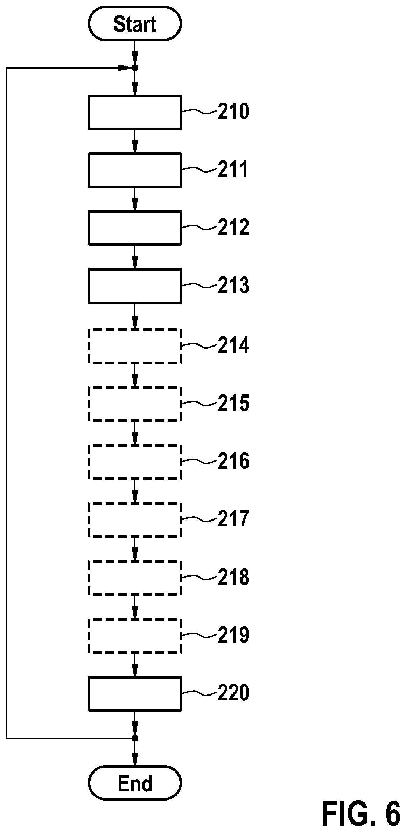

In Figur 6 ist ein Ablaufdiagramm des erfindungsgemäßen Steuerungsverfahrens dargestellt. In einem ersten Schritt 210 erfolgt die erste winkelabhängige, digitale Erfassung der magnetischen Flussdichte B_{d} mittels des ersten digitalen Magnetfeldsensors 113. In einem zweiten Schritt 211 wird die zweite winkelabhängige, digitale Erfassung der Flussdichte B_{d} mittels des zweiten digitalen Magnetfeldsensors 114 durchgeführt. In einem dritten Schritt 212 erfolgt die winkelabhängige, analoge Erfassung 212 der Flussdichte Bₐ mittels des analogen Magnetfeldsensors 112. Anschließend wird im Schritt 213 die Rotorlage X ermittelt und in einem weiteren Schritt 220 der Elektromotor 100 in Abhängigkeit der ermittelten Rotorlage X geregelt.

In einer bevorzugten Ausgestaltung der Erfindung erfolgt vor dem Schritt 220 in einem Schritt 214 eine Ermittlung von den Extremwerten B₁, B₂, B₃ und B₄ der analog erfassten Flussdichte Bₐ. Anschließend wird in einem weiteren Schritt 215 eine Berechnung des Mittelwerts M der Extremwert-Beträge |B₁|, |B₂|, |B₃| und |B₄| der analog erfassten Flussdichte Bₐ durchgeführt. Die Regelung im Schritt 220 erfolgt dabei in dieser Ausgestaltung in Abhängigkeit der Rotorlage X und zusätzlich in Abhängigkeit des berechneten Mittelwerts M.

Optional wird in einer Weiterführung nach der Berechnung 215 des Mittelwerts M der Extremwert-Beträge |B₁|, |B₂|, |B₃| und |B₄| und vor der Regelung 220 zusätzlich ein Vergleich 216 des berechneten Mittelwerts M mit dem Temperaturschwellenwert SW_{T} durchgeführt. Bei einer Unterschreitung des Temperaturschwellenwerts SW_{T} erzeugt die Recheneinheit 131 des Steuergeräts 130 in einem Schritt 217 zusätzlich ein weiteres Steuersignal für die Kühlvorrichtung zur Kühlung des Rotors 120. Beispielsweise schaltet das weitere Steuersignal im Schritt 217 einen Ventilator an und/oder stellt einen Bürstenkontakt des Rotors zu einer Wärmesenke her.

In einer Weiterführung der Erfindung erfolgt in einem weiteren Schritt 218 nach der Berechnung 215 des Mittelwerts M der Extremwert-Beträge |B₁|, |B₂|, |B₃| und |B₄| und vor der Regelung 220 die Zuordnung der Extremwerte B₁, B₂, B₃ und B₄ der analog erfassten Flussdichte Bₐ zu Rotorlagen X₁, X₂, X₃ und X₄ zu einem Zeitpunkt to bzw. die Zuordnung der Extremwerte B₁, B₂, B₃ und B₄ der analogen Flussdichte Bₐ zu der Position der Permanentmagnete am Rotor. Anschließend wird in einem Schritt 219 jeweils eine Differenz ΔB₁, ΔB₂, ΔB₃ und ΔB₄ jedes Extremwert-Betrags |B1|, |B2|, |B3| und |B4| zum berechneten Mittelwert M der analog erfassten Flussdichte Bₐ ermittelt. In dieser Weiterführung erfolgt die Regelung 220 des Elektromotors 100 in Abhängigkeit der Rotorlage und zusätzlich in Abhängigkeit mindestens einer ermittelten Differenz ΔB₁, ΔB₂, ΔB₃ und ΔB₄. Beispielsweise wird bei einem defekten Permanentmagneten 121b immer dann der jeweilige Phasenstrom einer der Phasenleitungen 111a, 111b und 111c in Abhängigkeit der Differenz ΔB₂ erhöht, wenn der defekte Permanentmagnet 121b in der Nähe bzw. unter der jeweiligen Phasenleitung durchläuft. Alternativ oder zusätzlich wird bei einem defekten Permanentmagneten 121b die Phasenverschiebung einer den defekten Permanentmagneten 121b anschiebenden Phase zur anziehenden Phase in Abhängigkeit der Differenz ΔB₂ reduziert. Dadurch gleicht die Regelung 220 des Elektromotors 100 lokale Defekte aus bzw. kompensiert diese, wodurch das Drehmoment und/oder die Drehzahl erhöht bzw. ein sonst resultierender Effizienzverlust des Elektromotors reduziert wird.

Optional wird dem Nutzer des Elektromotors 100, wenn der Mittelwert der Extremwert-Beträge |B₁|, |B₂|, |B₃| und |B₄| einen Temperaturwarnschwellenwert TWSW und/oder eine berechnete Differenz ΔB₁, ΔB₂, ΔB₃ und ΔB₄ einen Defektwarnschwellenwert DWSW überschreitet, eine Warnung angezeigt und/oder eine Reparatur des Elektromotors 100 empfohlen.

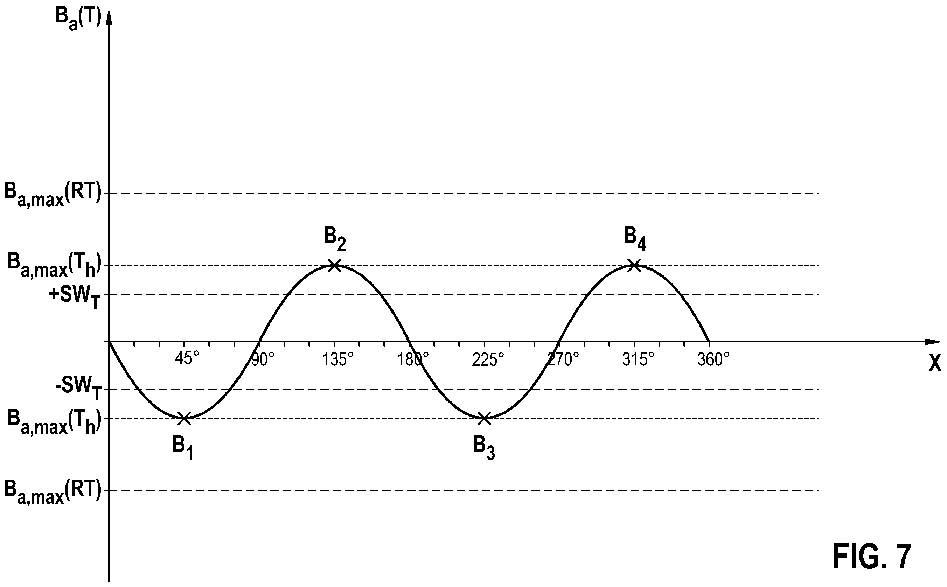

In Figur 7 ist beispielhaft die analog erfasste magnetische Flussdichte Bₐ, welche durch den analogen Magnetfeldsensor 112 erfasst wird, in Abhängigkeit der Rotorlage X bei einer erhöhten Temperatur Tₕ des Rotors 120 dargestellt. Die Extremwert-Beträge |B_{1|}|, |B₂|, |B₃| und |B₄| der analog erfassten magnetischen Flussdichte Bₐ sind im Vergleich zur Raumtemperatur RT bei einer erhöhten Temperatur Tₕ reduziert. Der Mittelwert M der Extremwert-Beträge der analog erfassten magnetische Flussdichte Bₐ sinkt folglich ebenfalls mit steigender Temperatur des Rotors.

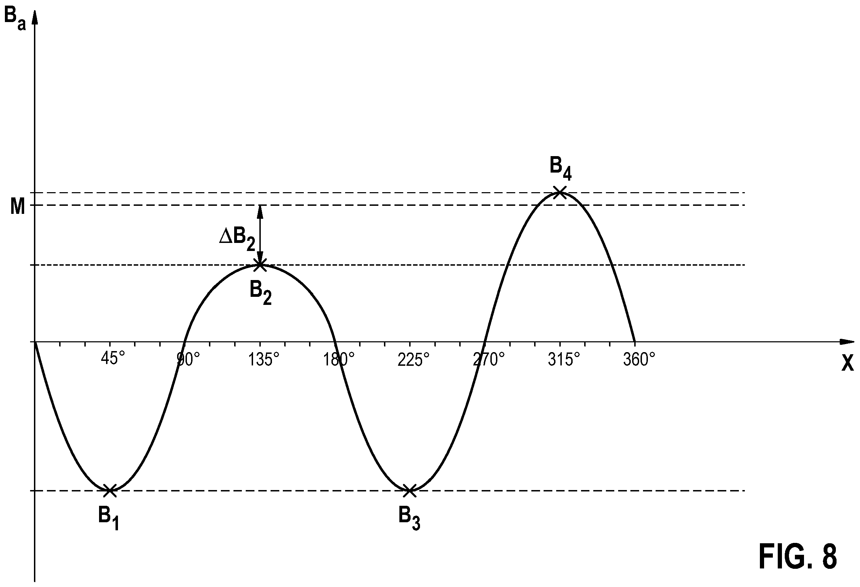

In Figur 8 ist die analog erfasste magnetische Flussdichte Bₐ dargestellt, welche durch den analogen Magnetfeldsensor 112 erfasst wird, in Abhängigkeit der Rotorlage X dargestellt, wobei der Rotor 120 eine lokale Abschwächung der magnetischen Flussdichte Bₐ eines am äußeren Umfang angeordneten Nordpols eines Permanentmagneten aufweist. Der defekte Permanentmagnet, welcher an einer definierten Position des Rotors befindet. Die Lage des mit dem Rotor 120 mitrotierenden, defekten Permanentmagneten kann auf die Rotorlage X zum Zeitpunkt t₀ bezogen und zum aktuellen Zeitpunkt aus der aktuellen Rotorlage bzw. der analog erfassten magnetischen Flussdichte Bₐ ermittelt werden. Beispielsweise repräsentiert der in Figur 8 dargestellte Extremwert-Betrag |B₂| die reduzierte magnetische Flussdichte des Permanentmagneten 121b. In dem Beispiel aus Figur 8 ist der Extremwert-Betrag |B₂| gegenüber den Extremwert-Beträgen |B₁|, |B₃| und |B₄| demnach reduziert. Die Extremwert-Beträge |B₁|, |B₂|, |B₃| und |B₄| können jeweils einer Rotorlage X zu einem Zeitpunkt t₀ zugeordnet werden, wobei die zugeordneten Rotorlagen X₁, X₂, X₃ und X₄ jeweils den Durchgang bzw. die Lage eines Permanentmagneten 121a, 121b, 121c und 121d des Rotors 120 repräsentieren.

## Patentansprüche

1. Steuerungsverfahren für einen Elektromotor (100), wobei der Elektromotor (100) wenigstens einen Stator (110) mit einem ersten digitalen Magnetfeldsensor (113) und einen davon beabstandeten zweiten digitalen Magnetfeldsensor (114) sowie einen Rotor (120) mit Permanentmagneten (121a, 121b, 121c, 121d) umfasst, wobei das Steuerungsverfahren die folgenden Schritte aufweist
• erste winkelabhängige, digitale Erfassung (210) einer magnetischen Flussdichte (B_{digital}) der Permanentmagnete (121a, 121b, 121c, 121d) mittels des ersten digitalen Magnetfeldsensors (113), und
• zweite winkelabhängige, digitale Erfassung (211) der Flussdichte (B_{digital}) mittels des zweiten digitalen Magnetfeldsensors (114), wobei der Stator (110) zusätzlich einen von den digitalen Magnetfeldsensoren (113, 114) beabstandeten analogen Magnetfeldsensor (112) umfasst, und
• das Steuerungsverfahren wenigstens die Schritte
i. winkelabhängige, analoge Erfassung (212) der Flussdichte (B) der Permanentmagnete (121a, 121b, 121c, 121d) mittels des analogen Magnetfeldsensors (112),
ii. Ermittlung (213) der Rotorlage (X) in Abhängigkeit der digital erfassten Flussdichte (B_{digital}) des ersten digitalen Magnetfeldsensors (113), der digital erfassten Flussdichte (B_{digital}) des zweiten digitalen Magnetfeldsensors (114) und der analog erfassten Flussdichte (B), und
iii. Regelung (220) des Elektromotors (100) in Abhängigkeit der ermittelten Rotorlage (X) aufweist,
**dadurch gekennzeichnet, dass**
eine Ermittlung (214) von Extremwerten (B₁, B₂, B₃, B₄) der analog erfassten Flussdichte (B) erfolgt, wobei die Regelung (220) zusätzlich in Abhängigkeit eines Mittelwerts (M) der Extremwert-Beträge (|B_{1|}|, |B₂|, |B₃|, |B₄|) erfolgt.

2. Steuerungsverfahren nach Anspruch 1, **dadurch gekennzeichnet, dass** ein Vergleich (216) des Mittelwerts (M) der Extremwert-Beträge (|B_{1|}|, |B₂|, |B₃|, |B₄|) mit einem Temperaturschwellenwert (SW_{T}) erfolgt, wobei in Abhängigkeit einer Unterschreitung des Temperaturschwellenwerts (SW_{T}) zusätzlich eine Kühlvorrichtung zur Kühlung (217) des Rotors (100) angesteuert wird.

3. Steuerungsverfahren nach einem der Ansprüche 1 oder 2, **dadurch gekennzeichnet, dass** das Steuerungsverfahren die folgenden Schritte umfasst
• Ermittlung (214) der Extremwerte (B₁, B₂, B₃, B₄) der analog erfassten Flussdichte (B),
• Berechnung (215) des Mittelwerts (M) der Extremwert-Beträge (|B_{1|}|, |B₂|, |B₃|, |B₄|),
• Zuordnung (218) jedes Extremwerts (B₁, B₂, B₃, B₄) zu einer Rotorlage (X₁, X₂, X₃, X₄) zu einem Zeitpunkt (t₀),
• Ermittlung (219) einer Differenz (ΔB_{1,} ΔB₂, ΔB₃, ΔB₄) jedes Extremwert-Betrags (|B_{1|}|, |B₂|, |B₃|, |B₄|) zum berechneten Mittelwert (M), und
• Regelung (220) des Elektromotors (100) zusätzlich in Abhängigkeit mindestens einer bestimmten Differenz (ΔB_{1,} ΔB₂, ΔB₃, ΔB₄).

4. Steuergerät, umfassend wenigstens eine Recheneinheit (131), welche dazu eingerichtet ist, ein Steuerungsverfahren nach einem der Ansprüche 1 bis 3 durchzuführen, wobei die Recheneinheit (131)
eine magnetische Flussdichte (B_{digital}) der Permanentmagnete (121a, 121b, 121c, 121d) eines Rotors (120) von einem ersten digitalen Magnetfeldsensors (113) und von einem zweiten digitalen Magnetfeldsensors (114) erfasst, wobei die Recheneinheit (131)
• die Flussdichte (B) der Permanentmagnete (121a, 121b, 121c, 121d) des Rotors (120) von einem analogen Magnetfeldsensors (112) erfasst,
• eine Rotorlage (X) in Abhängigkeit der digital erfassten Flussdichte (B_{digital}) des ersten digitalen Magnetfeldsensors (113) und des zweiten digitalen Magnetfeldsensors (114) sowie der analog erfassten Flussdichte (B) ermittelt, und
• mindestens zwei Steuersignale in Abhängigkeit der ermittelten Rotorlage (X) zur Regelung des Elektromotors (100) erzeugt,
**dadurch gekennzeichnet, dass** die Recheneinheit (131)
• die Extremwerte (B₁, B₂, B₃, B₄) der analog erfassten Flussdichte (B) ermittelt,
• einen Mittelwert (M) der Extremwert-Beträge (|B_{1|}|, |B₂|, |B₃|, |B₄|), berechnet, und
• die Stromstärken der mindestens zwei erzeugten Steuersignale zusätzlich in Abhängigkeit des berechneten Mittelwerts (M) regelt.

5. Steuergerät nach Anspruch 4, **dadurch gekennzeichnet, dass** die Recheneinheit (131)
• die Extremwerte (B₁, B₂, B₃, B₄) der analog erfassten Flussdichte (B) ermittelt,
• den Mittelwert (M) der Extremwert-Beträge (|B_{1|}|, |B₂|, |B₃|, |B₄|) berechnet, und
• den Mittelwert (M) mit einem Temperaturschwellenwert (SW_{T}) vergleicht,
wobei die Recheneinheit (131) bei einer Unterschreitung des Temperaturschwellenwerts (SW_{T}),
• ein Steuersignal zur Kühlung des Rotors (120) für eine Kühlvorrichtung erzeugt.

6. Steuergerät nach einem der Ansprüche 4 oder 5, **dadurch gekennzeichnet, dass** die Recheneinheit (131)
• die Extremwerte (B₁, B₂, B₃, B₄) der analog erfassten Flussdichte (B) ermittelt, wobei die ermittelten Extremwerte (B₁, B₂, B₃, B₄) zum Zeitpunkt (t₀) einer Rotorlage (X₁, X₂, X₃, X₄) zugeordnet werden,
• den Mittelwert (M) der Extremwert-Beträge (|B_{1|}|, |B₂|, |B₃|, |B₄|), berechnet,
• eine Differenz (ΔB_{1,} ΔB₂, ΔB₃, ΔB₄) jedes Extremwert-Betrags (|B_{1|}|, |B₂|, |B₃|, |B₄|) zum berechneten Mittelwert (M) bestimmt, und
• die Stromstärken der mindestens zwei erzeugten Steuersignale zusätzlich in Abhängigkeit der bestimmten Differenz (ΔB_{1,} ΔB₂, ΔB₃, ΔB₄) regelt.

7. Elektromotor (100), wenigstens aufweisend
• einen Rotor (120) mit Permanentmagneten (121a, 121b, 121c, 121d), und
• einen Stator (110) mit einem ersten digitalen Magnetfeldsensor (113) (113) und einem davon beabstandeten zweiten digitalen Magnetfeldsensor (114),
**dadurch gekennzeichnet, dass** der Elektromotor (100) zusätzlich
• einen analogen Magnetfeldsensor (112), und
• ein Steuergerät (130) nach einem der Ansprüche 4 bis 6 aufweist.

## Claims

1. Control method for an electric motor (100), wherein the electric motor (100) comprises at least one stator (110) with a first digital magnetic field sensor (113) and a second digital magnetic field sensor (114) at a distance from the latter, and a rotor (120) with permanent magnets (121a, 121b, 121c, 121d), wherein the control method has the following steps
• first angle-dependent digital capture (210) of a magnetic flux density (B_{digital}) of the permanent magnets (121a, 121b, 121c, 121d) by means of the first digital magnetic field sensor (113), and
• second angle-dependent digital capture (211) of the flux density (B_{digital}) by means of the second digital magnetic field sensor (114), wherein the stator (110) additionally comprises an analogue magnetic field sensor (112) at a distance from the digital magnetic field sensors (113, 114), and
• the control method has at least the following steps
i. angle-dependent analogue capture (212) of the flux density (B) of the permanent magnets (121a, 121b, 121c, 121d) by means of the analogue magnetic field sensor (112),
ii. determination (213) of the rotor position (X) on the basis of the digitally captured flux density (B_{digital}) from the first digital magnetic field sensor (113), the digitally captured flux density (B_{digital}) from the second digital magnetic field sensor (114) and the flux density (B) captured in an analogue manner, and
iii. regulation (220) of the electric motor (100) on the basis of the determined rotor position (X),
**characterized in that**
extreme values (B₁, B₂, B₃, B₄) of the flux density (B) captured in an analogue manner are determined (214), wherein the regulation (220) is additionally carried out on the basis of a mean value (M) of the absolute extreme values (|B₁|, |B₂|, |B₃|, |B₄|).

2. Control method according to Claim 1, **characterized in that** the mean value (M) of the absolute extreme values (|B₁|, |B₂|, |B₃|, |B₄|) is compared (216) with a temperature threshold value (SW_{T}), wherein a cooling apparatus for cooling (217) the rotor (100) is additionally actuated if the temperature threshold value (SW_{T}) is undershot.

3. Control method according to either of Claims 1 and 2, **characterized in that** the control method comprises the following steps
• determination (214) of the extreme values (B₁, B₂, B₃, B₄) of the flux density (B) captured in an analogue manner,
• calculation (215) of the mean value (M) of the absolute extreme values (|B₁|, |B₂|, |B₃|, |B₄|),
• assignment (218) of each extreme value (B₁, B₂, B₃, B₄) to a rotor position (X₁, X₂, X₃, X₄) at a time (t₀),
• determination (219) of a difference (ΔB₁, ΔB₂, ΔB₃, ΔB₄) between each absolute extreme value (|B₁|, |B₂|, |B₃|, |B₄|) and the calculated mean value (M), and
• regulation (220) of the electric motor (100) additionally on the basis of at least one determined difference (ΔB₁, ΔB₂, ΔB₃, ΔB₄) .

4. Control device comprising at least one computing unit (131) which is configured to carry out a control method according to one of Claims 1 to 3, wherein the computing unit (131)
• captures a magnetic flux density (B_{digital}) of the permanent magnets (121a, 121b, 121c, 121d) of a rotor (120) from a first digital magnetic field sensor (113) and from a second digital magnetic field sensor (114), wherein the computing unit (131)
• captures the flux density (B) of the permanent magnets (121a, 121b, 121c, 121d) of the rotor (120) from an analogue magnetic field sensor (112),
• determines a rotor position (X) on the basis of the digitally captured flux density (B_{digital}) from the first digital magnetic field sensor (113) and from the second digital magnetic field sensor (114) and the flux density (B) captured in an analogue manner, and
• generates at least two control signals on the basis of the determined rotor position (X) for the purpose of regulating the electric motor (100),
**characterized in that** the computing unit (131)
• determines the extreme values (B₁, B₂, B₃, B₄) of the flux density (B) captured in an analogue manner,
• calculates a mean value (M) of the absolute extreme values (|B₁|, |B₂|, |B₃|, |B₄|), and
• additionally regulates the current intensities of the at least two generated control signals on the basis of the calculated mean value (M).

5. Control device according to Claim 4, **characterized in that** the computing unit (131)
• determines the extreme values (B₁, B₂, B₃, B₄) of the flux density (B) captured in an analogue manner,
• calculates the mean value (M) of the absolute extreme values (|B₁|, |B₂|, |B₃|, |B₄|), and
• compares the mean value (M) with a temperature threshold value (SW_{T}),
wherein, if the temperature threshold value (SW_{T}) is undershot, the computing unit (131)
• generates a control signal for cooling the rotor (120) for a cooling apparatus.

6. Control device according to either of Claims 4 and 5, **characterized in that** the computing unit (131)
• determines the extreme values (B₁, B₂, B₃, B₄) of the flux density (B) captured in an analogue manner, wherein the determined extreme values (B₁, B₂, B₃, B₄) are assigned to a rotor position (X₁, X₂, X₃, X₄) at the time (t₀),
• calculates the mean value (M) of the absolute extreme values (|B₁|, |B₂|, |B₃|, |B₄|),
• determines a difference (ΔB₁, ΔB₂, ΔB₃, ΔB₄) between each absolute extreme value (|B₁|, |B₂|, |B₃|, |B₄|) and the calculated mean value (M), and
• additionally regulates the current intensities of the at least two generated control signals on the basis of the determined difference (ΔB₁, ΔB₂, ΔB₃, ΔB₄) .

7. Electric motor (100) at least having
• a rotor (120) with permanent magnets (121a, 121b, 121c, 121d), and
• a stator (110) with a first digital magnetic field sensor (113) and a second digital magnetic field sensor (114) at a distance from the latter, **characterized in that** the electric motor (100) additionally has
• an analogue magnetic field sensor (112), and
• a control device (130) according to one of Claims 4 to 6.

## Revendications

1. Procédé de commande pour un moteur électrique (100), le moteur électrique (100) comportant au moins un stator (110) pourvu d'un premier détecteur de champ magnétique numérique (113) et d'un deuxième détecteur de champ magnétique numérique (114), espacé de celui-ci, ainsi qu'un rotor (120) pourvu d'aimants permanents (121a, 121b, 121c, 121d), le procédé de commande comprenant les étapes suivantes
* première acquisition numérique (210) dépendante de l'angle d'une densité de flux (B_{digital}) magnétique des aimants permanents (121a, 121b, 121c, 121d) au moyen du premier détecteur de champ magnétique numérique (113), et
* acquisition numérique (211) dépendante de l'angle de la densité de flux (B_{digital}) au moyen du deuxième détecteur de champ magnétique numérique (114), le stator (110) comportant en outre un détecteur de champ magnétique analogique (112) espacé des détecteurs de champ magnétique numériques (113, 114), et
* le procédé de commande comprenant au moins les étapes
i acquisition analogique (212) dépendante de l'angle de la densité de flux (B) des aimants permanents (121a, 121b, 121c, 121d) au moyen du détecteur de champ magnétique analogique (112),
ii détermination (213) de la position du rotor (X) en fonction de la densité de flux (B_{digital}) acquise numériquement du premier détecteur de champ magnétique numérique (113), de la densité de flux (B_{digital}) acquise numériquement du deuxième détecteur de champ magnétique numérique (114) et de la densité de flux (B) acquise de manière analogique, et
iii régulation (220) du moteur électrique (100) en fonction de la position du rotor (X) déterminée, **caractérisé en ce que**
la détermination (214) de valeurs extrêmes (B₁, B₂, B₃, B₄) de la densité de flux (B) acquise de manière analogique est effectuée, la régulation (220) s'effectuant en plus en fonction d'une valeur moyenne (M) des valeurs absolues extrêmes (|B₁|, |B₂|, |B₃|, |B₄|).

2. Procédé de commande selon la revendication 1, **caractérisé en ce qu'**une comparaison (216) de la valeur moyenne (M) des valeurs absolues extrêmes (|B₁|, |B₂|, |B₃|, |B₄|) avec une valeur de seuil de température (SW_{T}) est effectuée, un dispositif de refroidissement servant au refroidissement (217) du rotor (100) étant en plus asservi en fonction d'un franchissement vers le bas de la valeur de seuil de température (SW_{T}).

3. Procédé de commande selon l'une des revendications 1 ou 2, **caractérisé en ce que** le procédé de commande comprend les étapes suivantes
* détermination (214) des valeurs extrêmes (B₁, B₂, B₃, B₄) de la densité de flux (B) acquise de manière analogique,
* calcul (215) de la valeur moyenne (M) des valeurs absolues extrêmes (|B₁|, |B₂|, |B₃|, |B₄|),
* affectation (218) de chaque valeur extrême (B₁, B₂, B₃, B₄) à une position du rotor (X₁, X₂, X₃, X₄) à un instant (t₀),
* détermination (219) d'une différence (ΔB₁, ΔB₂, ΔB₃, ΔB₄) entre chaque valeur absolue extrême (|B₁|, |B₂|, |B₃|, |B₄|) et la valeur moyenne (M) calculée, et
* régulation (220) du moteur électrique (100) en plus en fonction d'au moins une différence (ΔB₁, ΔB₂, ΔB₃, ΔB₄) déterminée.

4. Contrôleur, comprenant au moins une unité de calcul (131) qui est conçue pour mettre en œuvre un procédé de commande selon l'une des revendications 1 à 3, l'unité de commande (131)
acquérant une densité de flux (B_{digital}) magnétique des aimants permanents (121a, 121b, 121c, 121d) d'un rotor (120) par un premier détecteur de champ magnétique numérique (113) et par un deuxième détecteur de champ magnétique numérique (114), l'unité de commande (131)
* acquérant la densité de flux (B) des aimants permanents (121a, 121b, 121c, 121d) du rotor (120) par un détecteur de champ magnétique analogique (112),
* détermine la position du rotor (X) en fonction de la densité de flux (B_{digital}) acquise numériquement du premier détecteur de champ magnétique numérique (113) et du deuxième détecteur de champ magnétique numérique (114) ainsi que de la densité de flux (B) acquise de manière analogique, et
* génère au moins deux signaux de commande en fonction de la position du rotor (X) déterminée en vue de réguler le moteur électrique (100),
**caractérisé en ce que** l'unité de calcul (131)
* détermine les valeurs extrêmes (B₁, B₂, B₃, B₄) de la densité de flux (B) acquise de manière analogique
* calcule une valeur moyenne (M) des valeurs absolues extrêmes (|B₁|, |B₂|, |B₃|, |B₄|), et
* régule les intensités de courant des au moins deux signaux de commande générés en plus en fonction de la valeur moyenne (M) calculée.

5. Contrôleur selon la revendication 4, **caractérisé en ce que** l'unité de calcul (131)
* détermine les valeurs extrêmes (B₁, B₂, B₃, B₄) de la densité de flux (B) acquise de manière analogique,
* calcule la valeur moyenne (M) des valeurs absolues extrêmes (|B₁|, |B₂|, |B₃|, |B₄|), et
* compare la valeur moyenne (M) avec une valeur de seuil de température (SW_{T}),
l'unité de calcul (131), dans le cas d'un franchissement vers le bas de la valeur de seuil de température (SW_{T}),
* générant un signal de commande destiné à refroidir le rotor (120) pour un dispositif de refroidissement.

6. Contrôleur selon l'une des revendications 4 ou 5, **caractérisé en ce que** l'unité de calcul (131)
* détermine les valeurs extrêmes (B₁, B₂, B₃, B₄) de la densité de flux (B) acquise de manière analogique, les valeurs extrêmes (B₁, B₂, B₃, B₄) déterminées étant affectées à l'instant (t₀) à une position du rotor (X₁, X₂, X₃, X₄),
* calcule la valeur moyenne (M) des valeurs absolues extrêmes (|B₁|, |B₂|, |B₃|, |B₄|),
* détermine une différence (ΔB₁, ΔB₂, ΔB₃, ΔB₄) entre chaque valeur absolue extrême (|B₁|, |B₂|, |B₃|, |B₄|) et la valeur moyenne (M) calculée, et
* régule les intensités de courant des au moins deux signaux de commande générés en plus en fonction de la différence (ΔB₁, ΔB₂, ΔB₃, ΔB₄) déterminée.

7. Moteur électrique (100), possédant au moins
* un rotor (120) pourvu d'aimants permanents (121a, 121b, 121c, 121d), et
* un stator (110) pourvu d'un premier détecteur de champ magnétique numérique (113) et d'un deuxième détecteur de champ magnétique numérique (114), espacé de celui-ci,
**caractérisé en ce que** le moteur électrique (100) possède en plus
* un détecteur de champ magnétique analogique (112), et
* un contrôleur (130) selon l'une des revendications 4 à 6.
